# EUROPEAN PATENT APPLICATION

(11) **EP 4 664 624 A1**
(43) Date of publication of application: **17.12.2025**
(21) Application number: 23920994.3
(22) Date of filing: 06.02.2023
(51) Int. Cl.: H01M 50/169, H01M 50/15, H01M 50/55

(54) **MANUFACTURING METHOD FOR BATTERY, AND BATTERY**

(71) Applicant: Kabushiki Kaisha Toshiba, Tokyo 105-0023 (JP)
(72) Inventor: MIZOGUCHI, Kosuke, Tokyo 105-0023 (JP); YAMAMOTO, Kuniaki, Tokyo 105-0023 (JP); MORITA, Shusuke, Tokyo 105-0023 (JP); YANO, Takuma, Tokyo 105-0023 (JP)
(74) Representative: Hoffmann Eitle
(86) International application number: PCT/JP2023/003736
(87) International publication number: WO 2024/166156

(57) **Abstract**

In a manufacturing method of a battery of embodiments, a pair of terminals are attached to a lid, in which first and second edges along a first direction and third and fourth edges along a second direction intersecting the first direction form an outer periphery, while separating a second terminal from a first terminal to a side where the fourth edge is located. In the manufacturing method, a proximity portion closer to the first terminal than the third edge on the first edge is formed, and an outer periphery of the lid is welded to the outer container by performing laser welding a plurality of times. At least the proximity portion is welded by first laser welding, and one or more of start points and one or more of end points of the plurality of processes of laser welding are located in a range between the terminals.

## Description

### FIELD

Embodiments of the present invention relate to a manufacturing method of a battery and a battery.

### BACKGROUND

As a battery such as a lithium ion secondary battery, there is a battery in which an outer part is formed from an outer container and a lid. In such a battery, an electrode group is housed in an inner cavity of the outer container, and the inner cavity opens to the outside of the outer container. The lid is attached to the outer container in a state of closing the opening of the inner cavity. A pair of terminals is attached to the lid in a state of being exposed to the outside, and each of the pair of terminals is electrically connected to the electrode group. In the manufacture of the battery, the lid is attached to the outer container by welding the outer periphery of the lid to the outer container over the entire circumference via laser welding or the like. Therefore, the battery has a welded portion where the lid is welded to the outer container. An insulator and a gasket are provided at each of attachment portions of the terminals to the lid. At each attachment portion of the terminal to the lid, the terminal is electrically insulated from the lid by the insulator and the gasket, and gas leakage to the outside through the attachment portion of the terminal is prevented by the gasket.

As described above, in the battery in which the outer part is formed of the outer container and the lid, a large current is achieved by increasing the volumes of the terminals. When the volume of each terminal increases, the distances from the terminal, the gasket, and the insulator to the welded portion of the lid to the outer container decrease. In addition, when the lid is welded to the outer container by laser welding, the welding generates heat to raise the temperature of the welded portion and the vicinity thereof. In the battery in which the outer part is formed from the outer container and the lid, it is required to reduce an influence of heat generated by welding of the lid to the outer container on the gasket, the insulator, and the like, even when the volumes of the pair of terminals are increased. That is, even in manufacturing the battery in which the gasket and the insulator are close to the welded portion of the lid to the outer container, it is required to reduce a temperature increase in the gasket and the like caused by heat generated by welding while the lid is being welded to the outer container.

### CITATION LIST

### PATENT LITERATURE

Patent Literature 1: Jpn. Pat. Appln. KOKAI Publication No. H8-250079
Patent Literature 2: Jpn. Pat. Appln. KOKAI Publication No. 2018-116881

### SUMMARY

### TECHNICAL PROBLEM

An object of the present invention is to provide a battery that achieves a large current due to an increase in the volumes of terminals and reduces an influence of heat generated by welding a lid to an outer container on a gasket and the like, and a manufacturing method of the battery.

### SOLUTION TO PROBLEM

According to an embodiment, in a manufacturing method of a battery, an outer container having an inner cavity open to an outside is formed, and a lid in which a first edge and a second edge along a first direction, and a third edge and a fourth edge along a second direction intersecting the first direction form an outer periphery is formed. In the manufacturing method, the first terminal and the second terminal are attached to the lid while separating the second terminal from the first terminal to a side on which the fourth edge is located in the first direction, and a first proximity portion closer to the first terminal than the third edge on the first edge is formed. In the manufacturing method, an electrode group electrically connected to the first terminal and the second terminal is housed in the inner cavity of the outer container, and an opening of the inner cavity is closed with the lid. In the manufacturing method, the outer periphery of the lid is welded to the outer container over an entire circumference by performing laser welding a plurality of times on the lid closing the opening of the inner cavity. At least the first proximity portion of the first edge is welded by first laser welding, and one or more of start points and one or more of end points of the plurality of processes of laser welding are located in an intermediate range between the first terminal and the second terminal in the first direction.

### BRIEF DESCRIPTION OF THE DRAWINGS

FIG. 1 is a perspective view of a battery according to a first embodiment.
FIG. 2 is a schematic view of the battery according to the first embodiment as viewed from one side in a depth direction, illustrating a part of the battery in a cross section orthogonal or substantially orthogonal to the depth direction.
FIG. 3 is a perspective view of a lid of the battery and its vicinity according to the first embodiment without a pair of terminals.
FIG. 4 is a plan view of the battery according to the first embodiment as viewed from a side where the lid is located in a height direction.
FIG. 5 is a schematic diagram illustrating an example of welding of the lid to an outer container that is performed at the time of manufacturing the battery according to the first embodiment.
FIG. 6 is a schematic cross-sectional view of an example of a portion where one welding mark overlaps another welding mark at a welded portion of the lid to the outer container of the battery according to the first embodiment.
FIG. 7 is a schematic view illustrating an example of a welding mark formed by laser welding.
FIG. 8 is a schematic diagram illustrating an example of welding of the lid to an outer container that is performed at the time of manufacturing the battery according to one modification of the first embodiment.
FIG. 9 is a schematic diagram illustrating an example of welding of a lid to an outer container that is performed at the time of manufacturing a battery according to a second embodiment.
FIG. 10 is a schematic diagram illustrating an example of welding of a lid to an outer container in a comparative example.

### DETAILED DESCRIPTION

Embodiments will be described below with reference to the drawings.

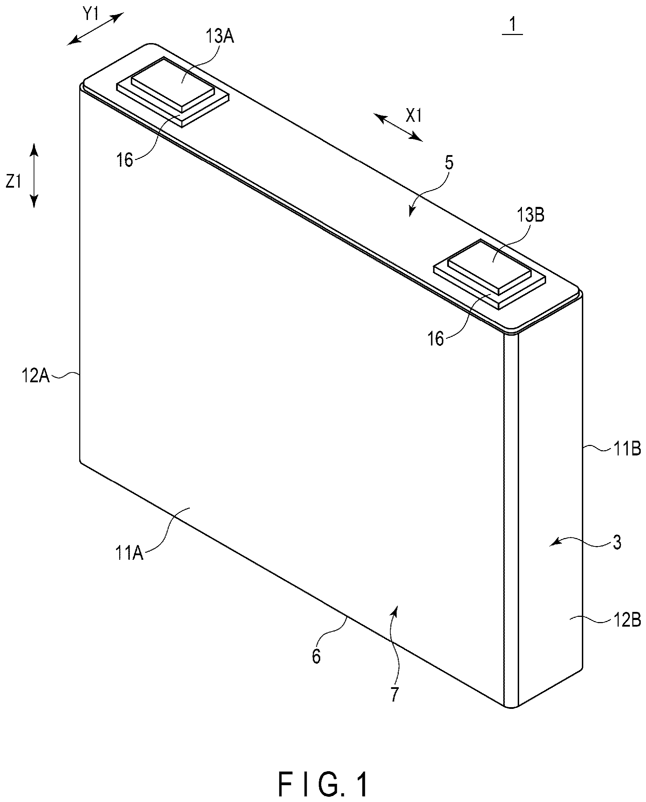

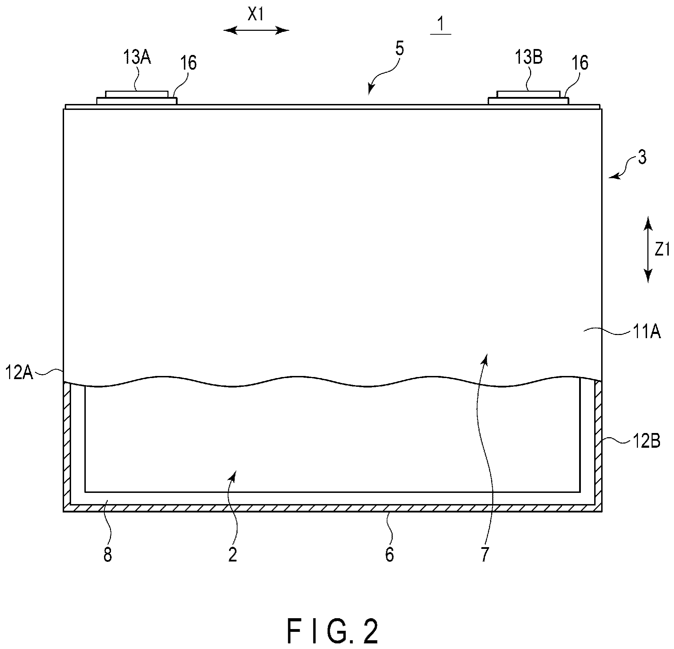

FIGS. 1 and 2 illustrate a battery 1 according to a first embodiment. As illustrated in FIGS. 1 and 2, the battery 1 includes an electrode group 2, an outer container 3, and a lid 5. In the battery 1, an outer part is formed by the outer container 3 and the lid 5, and the outer container 3 and the lid 5 are each formed of metal such as aluminum, aluminum alloy, iron, copper, or stainless steel, and have conductivity. In the battery 1 (outer container 3) as an example of FIGS. 1 and 2, a lateral direction (direction indicated by arrow X1), a depth direction (direction indicated by arrow Y1) intersecting (orthogonal or substantially orthogonal to) the lateral direction, and a height direction (direction indicated by arrow Z1) intersecting (orthogonal or substantially orthogonal to) both the lateral direction and the depth direction are defined. In each of the battery 1 and the outer container 3, the dimension along the depth direction is smaller than the dimension along the lateral direction and the dimension along the height direction. FIG. 1 is a perspective view, and FIG. 2 illustrates a state viewed from one side in the depth direction, and illustrates a part in a cross section orthogonal or substantially orthogonal to the depth direction.

The outer container 3 includes a bottom wall 6 and a peripheral wall 7. The outer container 3 has an inner cavity 8 formed inside, and the inner cavity 8 opens toward the side opposite to the side where the bottom wall 6 is located in the height direction of the battery 1. The peripheral wall 7 covers the entire circumference of the inner cavity 8 from the outer peripheral side. The peripheral wall 7 is connected to the bottom wall 6 and extends from the bottom wall 6 along the height direction of the battery 1. The edge of the opening of the inner cavity 8 is formed by the end of the peripheral wall 7 opposite to the bottom wall 6. The peripheral wall 7 includes side walls 11A, 11B, 12A, and 12B. The side walls 11A and 11B face each other in the depth direction with the inner cavity 8 in between. The side walls 12A and 12B face each other in the lateral direction with the inner cavity 8 in between. The side walls 11A and 11B extend along the lateral direction between the side walls 12A and 12B. The side walls 12A and 12B extend along the depth direction between the side walls 11A and 11B.

In the example of FIGS. 1 and 2, the dimensions of the side walls 11A and 11B along the lateral direction are larger than the dimensions of the side walls 12A and 12B along the depth direction. Therefore, in the inner cavity 8 and the opening of the inner cavity 8, the dimensions along the lateral direction are larger than the dimensions along the depth direction. The lid 5 is attached to the peripheral wall 7 at the end opposite to the bottom wall 6. Therefore, the lid 5 closes the opening of the inner cavity 8. The lid 5 and the bottom wall 6 face each other in the height direction with the inner cavity 8 in between.

The electrode group 2 is stored in the inner cavity 8. The electrode group 2 includes a positive electrode and a negative electrode (both not illustrated). In the electrode group 2, a separator (not illustrated) is interposed between the positive electrode and the negative electrode. The separator has electrical insulation properties and electrically insulates the positive electrode from the negative electrode. In one example, the electrode group 2 has a wound structure. In this case, in the electrode group 2, the positive electrode, the negative electrode, and the separator are wound in a state where the separator is sandwiched between the negative electrode and the positive electrode. In another example, the electrode group 2 has a stack structure. In this case, in the electrode group 2, a plurality of positive electrodes and a plurality of negative electrodes are alternately stacked, and a separator is provided between the positive electrode and the negative electrode.

In the inner cavity 8, an electrolytic solution (not illustrated) is held (impregnated) in the electrode group. The electrolytic solution may be a non-aqueous electrolytic solution in which an electrolyte is dissolved in an organic solvent, or may be an aqueous electrolytic solution such as an aqueous solution. Instead of the electrolytic solution, a gel electrolyte may be used, or a solid electrolyte may be used. When a solid electrolyte is used as the electrolyte, the solid electrolyte is interposed between the positive electrode and the negative electrode instead of the separator in the electrode group 2. In this case, the positive electrode is electrically insulated from the negative electrode by the solid electrolyte.

In the battery 1, a pair of terminals (electrode terminals) 13A and 13B opposite in polarity to each other is attached to the lid 5. The terminals 13A and 13B are formed of a conductive material such as metal. One of the pair of terminals 13A and 13B serves as a positive electrode terminal of the battery 1, and the other of the pair of terminals 13A and 13B, which is different from the positive electrode terminal, serves as a negative electrode terminal of the battery 1. The terminals 13A and 13B are attached to the lid 5 in a state of being partially exposed to the outside. In the example of FIGS. 1 and 2, the terminals 13A and 13B are arranged apart from each other in the lateral direction of the battery 1.

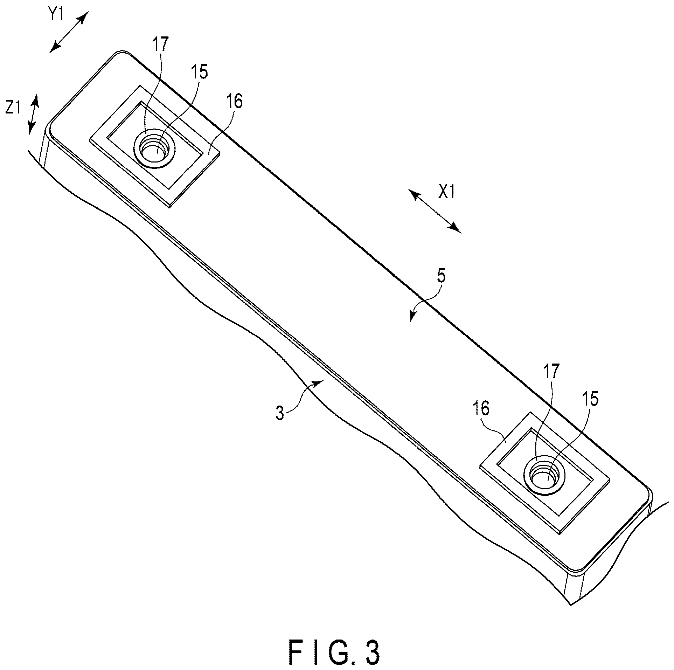

FIG. 3 illustrates the lid 5 and its vicinity without the pair of terminals 13A and 13B. As illustrated in FIG. 3 and the like, the lid 5 has a pair of through holes 15, and the through holes 15 penetrate the lid 5 from the outer surface to the inner surface. The pair of through holes 15 are formed apart from each other in the lateral direction of the battery 1. Each of the terminals 13A and 13B is inserted into the inner cavity 8 through the corresponding one of the pair of through holes 15. In the inner cavity 8, each of the terminals 13A and 13B is electrically connected to the electrode group 2 via one or more leads (not illustrated) therebetween. In the battery 1, the positive electrode terminal, which is one of the terminals 13A and 13B, is electrically connected to the positive electrode of the electrode group 2 via one or more leads in between. The negative electrode terminal, which is the other of the terminals 13A and 13B, is electrically connected to the negative electrode of the electrode group 2 via one or more leads in between. In the inner cavity 8, the leads electrically connecting the terminals 13A and 13B and the electrode group 2 are electrically insulated from the outer container 3 and the lid 5 by an insulating member (not illustrated).

As illustrated in FIGS. 1 to 3 and the like, a pair of insulators 16 is arranged on the outer surface of the lid 5. Each of the insulators 16 has an electrical insulation property and is sandwiched between the corresponding one of the terminals 13A and 13B and the outer surface of the lid 5. As illustrated in FIG. 3 and the like, the battery 1 includes a pair of gaskets 17, and a corresponding one of the gaskets 17 is arranged in each of the pair of through holes 15. Each of the gaskets 17 has an electrical insulation property. In each of the through holes 15, the gasket 17 is sandwiched between the corresponding one of the terminals 13A and 13B and the peripheral edge of the corresponding one of the through hole 15. In addition, the outer peripheral edge of each of the gaskets 17 is covered with the corresponding one of the insulators 16. Each of the terminals 13A and 13B is prevented from contacting the lid 5 and is electrically insulated from the lid 5 by the corresponding one of the insulators 16 and the corresponding one of the gaskets 17. In each of the through holes 15, each of the gaskets 17 keeps airtight and liquid-tight a space between its peripheral edge and the corresponding one of the terminals 13A and 13B. Therefore, each of the gaskets 17 seals the corresponding one of the through holes 15, and prevents leakage of a gas, an electrolyte solution, or the like to the outside through the corresponding one of the attachment portions of the terminals 13A and 13B.

In the battery 1, a gas release valve and an electrolyte solution filling port may be formed in the lid 5. In this case, a sealing plate for closing the electrolyte solution filling port is welded to the outer surface of the lid 5. The gas release valve and the electrolyte solution filling port are arranged between the pair of terminals 13A and 13B in the lateral direction of the battery 1. In the battery 1, the gas release valve, the electrolyte solution filling port, and the like may not be provided as in the example of FIGS. 1 to 3.

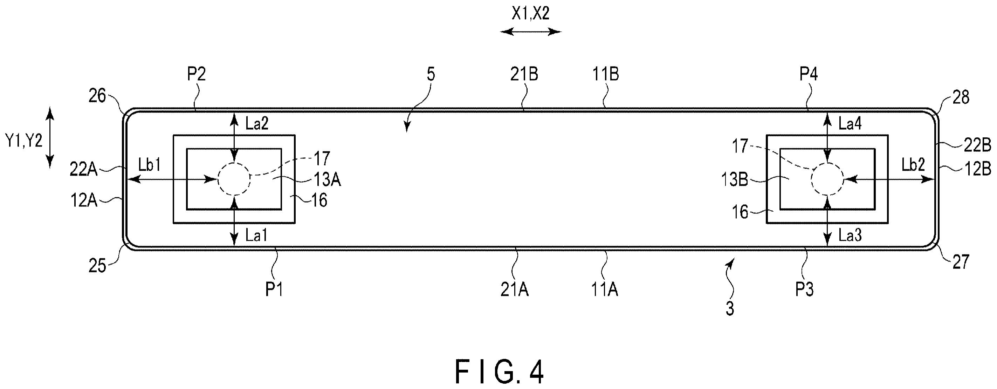

FIG. 4 shows the battery 1 as viewed from a side where the lid 5 is located in the height direction. As illustrated in FIGS. 1 to 4 and the like, the lid 5 is formed in a plate shape and a substantially plate shape. In the lid 5, a first direction (direction indicated by arrow X2), a second direction (direction indicated by arrow Y2) intersecting (orthogonal or substantially orthogonal to) the first direction, and a plate thickness direction (direction orthogonal or substantially orthogonal to the page of FIG. 4) intersecting (orthogonal or substantially orthogonal to) both the first direction and the second direction are defined. In the lid 5, the dimension along the first direction is larger than the dimension along the second direction. Therefore, in the example of FIG. 4 and the like, in the lid 5, the first direction is also called a long-side direction, and the second direction is also called a short-side direction. In the lid 5, the dimension along the second direction is larger than the dimension along the plate thickness direction.

The lid 5 includes a pair of edges 21A and 21B along the first direction and a pair of edges 22A and 22B along the second direction. The edges 21A and 21B are separated from each other in the second direction, and the edges 21A and 21B extend between the edges 22A and 22B along the first direction (long-side direction). The edges 22A and 22B are separated from each other in the first direction, and the edges 22A and 22B extend between the edges 21A and 21B along the second direction (short-side direction). In the lid 5, an outer periphery (outer peripheral edge) is formed by the edges 21A, 21B, 22A, and 22B, and the lid 5 is surrounded by the edges 21A, 21B, 22A, and 22B. The dimensions of the edge (first edge) 21A and the edge (second edge) 21B along the first direction are larger than the dimensions of the edge (third edge) 22A and the edge (fourth edge) 22B along the second direction. Therefore, the edges 21A and 21B are also called long edges, and the edges 22A and 22B are also called short edges.

The lid 5 is formed in a rectangular shape or a substantially rectangular shape as viewed from the plate thickness direction. The lid 5 includes four corners 25 to 28. The corner (first corner) 25 is formed between the edge 21A and the edge 22A, the corner (second corner) 26 is formed between the edge 21B and the edge 22A, the corner (third corner) 27 is formed between the edge 21A and the edge 22B, and the corner (fourth corner) 28 is formed between the edge 21B and the edge 22B. In the lid 5, the pair of terminals 13A and 13B are arranged away from each other in the first direction (long-side direction). In the present embodiment, the terminal (first terminal) 13A is arranged at a position closer to the edge (third edge) 22A than the terminal (second terminal) 13B, and the terminal 13B is attached to the lid 5 away from the terminal 13A toward the side where the edge (fourth edge) 22B is located in the first direction.

The edge (first edge) 21A has a proximity portion (first proximity portion) P1 located closer to the terminal 13A than the edge (third edge) 22A, and the edge (second edge) 21B has a proximity portion (second proximity portion) P2 located closer to the terminal 13A than the edge 22A. The separation distance of each of the proximity portions P1 and P2 from the terminal 13A is smaller than the separation distance of the edge 22A from the terminal 13A. The separation distance of each of the proximity portions P1 and P2 from the gasket 17, the insulator 16, and the like arranged at the attachment portion of the terminal 13A is smaller than the separation distance of the edge 22A from the gasket 17, the insulator 16, and the like arranged at the attachment portion of the terminal 13A. Relative to the gasket 17 at the attachment portion of the terminal (first terminal) 13A, a separation distance La1 of the proximity portion P1 of the edge (first edge) 21A, a separation distance La2 of the proximity portion P2 of the edge (second edge) 21B, and a separation distance Lb1 of the edge (third edge) 22A are defined. Each of the separation distances La1 and La2 is smaller than the separation distance Lb1.

The edge (first edge) 21A has a proximity portion (third proximity portion) P3 located closer to the terminal 13B than the edge (fourth edge) 22B, and the edge (second edge) 21B has a proximity portion (fourth proximity portion) P4 located closer to the terminal 13B than the edge 22B. The separation distance of each of the proximity portions P3 and P4 from the terminal 13B is smaller than the separation distance of the edge 22B from the terminal 13B. The separation distance of each of the proximity portions P3 and P4 from the gasket 17, the insulator 16, and the like arranged at the attachment portion of the terminal 13B is smaller than the separation distance of the edge 22B from the gasket 17, the insulator 16, and the like arranged at the attachment portion of the terminal 13B. Relative to the gasket 17 at the attachment portion of the terminal (second terminal) 13B, a separation distance La3 of the proximity portion P3 of the edge (first edge) 21A, a separation distance La4 of the proximity portion P4 of the edge (second edge) 21B, and a separation distance Lb2 of the edge (fourth edge) 22B are defined. Each of the separation distances La3 and La4 is smaller than the separation distance Lb2.

The lid 5 is attached to the outer container 3 in a state where the plate thickness direction coincides with or substantially coincides with the height direction of the battery 1 (outer container 3). In the lid 5 attached to the outer container 3, the first direction (long-side direction) coincides or substantially coincides with the lateral direction of the battery 1, and the second direction (short-side direction) coincides or substantially coincides with the depth direction of the battery 1. Therefore, in a state where the lid 5 is attached to the outer container 3, the edges 21A and 21B extend along the lateral direction of the battery 1, and the edges 22A and 22B extend along the depth direction of the battery 1.

In the lid 5, the outer periphery formed of the edges 21A, 21B, 22A, and 22B is welded to the outer container 3 over the entire circumference. Therefore, the outer periphery of the lid 5 has a welded portion to the outer container 3, over the entire circumference in the circumferential direction of the lid 5. The outer periphery of the lid 5 is welded to the outer container 3 over the entire circumference, whereby the lid 5 is attached to the outer container 3. In the present embodiment, at the manufacturing of the battery 1, the lid 5 is welded by laser a plurality of times in a state where the opening of the inner cavity 8 is closed by the lid 5, whereby the lid 5 is welded to the outer container 3 and a welded portion of the lid 5 to the outer container 3 is formed. In the lid 5, the edge 21A is welded to the side wall 11A of the outer container 3, the edge 21B is welded to the side wall 11B of the outer container 3, the edge 22A is welded to the side wall 12A of the outer container 3, and the edge 22B is welded to the side wall 12B of the outer container 3.

At the manufacturing of the battery 1, first, the outer container 3 and the lid 5 are formed. At this time, the inner cavity 8 is formed in the outer container 3, and the edges 21A, 21B, 22A, and 22B and the corners 25 to 28 are formed in the lid 5. Then, the terminals 13A and 13B are attached to the lid 5. At this time, the terminal 13B is attached to the lid 5, away from the terminal 13A, toward the side where the edge (fourth edge) 22B is located in the first direction. The insulators 16 and the gaskets 17 are attached to the lid 5 at the attachment portions of the terminals 13A and 13B to the lid 5. The terminals 13A and 13B attached to the lid 5 are electrically connected to the electrode group 2 via one or more leads or the like. At this time, one of the terminals 13A and 13B is electrically connected to the positive electrode of the electrode group 2, and the other of the terminals 13A and 13B is electrically connected to the negative electrode of the electrode group 2.

Then, in a state where the terminals 13A and 13B are electrically connected to the electrode group 2, the electrode group 2 is inserted into the inner cavity 8 of the outer container 3, and the opening of the inner cavity 8 is closed by the lid 5. Then, the lid 5 is welded by laser a plurality of times in a state where the opening of the inner cavity 8 is closed by the lid 5, whereby the lid 5 is welded to the outer container 3 and a welded portion of the lid 5 to the outer container 3 is formed. At the manufacturing of the battery 1, one welding mark is formed every time laser welding is performed once in the attachment of the lid 5 to the outer container 3. In the present embodiment, since the laser welding is performed a plurality of times, a plurality of welding marks are formed at a welded portion of the lid 5 to the outer container 3 in the battery 1. In the battery 1, the same number of welding marks as the number of times when laser welding was performed in attachment of the lid 5 to the outer container 3 are formed in the welded portion of the lid 5 to the outer container 3.

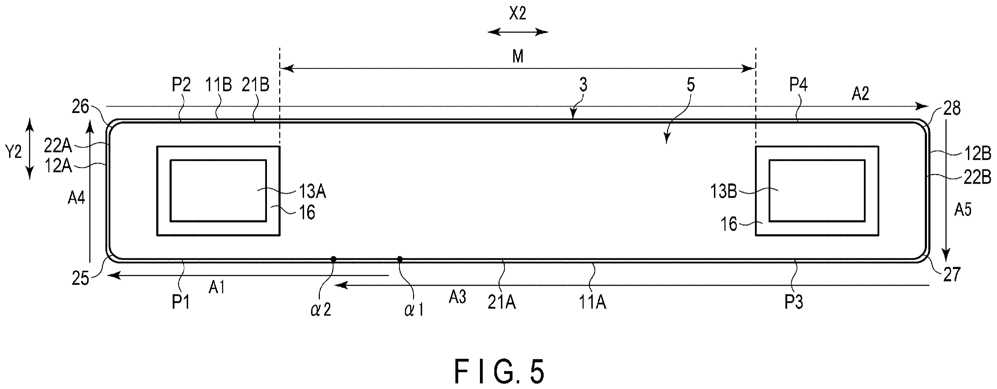

FIG. 5 shows an example of welding of the lid 5 to the outer container 3 at the time of manufacturing the battery 1. FIG. 5 illustrates the battery 1 as viewed from the side where the lid 5 is located in the height direction. In the example of FIG. 5, in the welding of the lid 5 to the outer container 3, laser welding is performed five times. In the first laser welding, welding is performed between an intermediate position (first intermediate position) α1 of the edge (first edge) 21A and the corner (first corner) 25 through the proximity portion (first proximity portion) P1. In the example of FIG. 5, in the first laser welding, welding is performed from the intermediate position α1 to the corner 25 through the proximity portion P1 (arrow A1). That is, welding is performed through the proximity portion P1 with the intermediate position α1 as a start point and the corner 25 as an end point. Accordingly, a portion between the intermediate position α1 and the corner 25 including the proximity portion P1 is welded to the outer container 3.

In the first laser welding, welding may be performed from the corner 25 to the intermediate position α1 through the proximity portion P1, that is, in a direction opposite to the arrow A1. In this case, welding is performed through the proximity portion P1 with the corner 25 as a start point and the intermediate position α1 as an end point. Also in the case of performing the first laser welding in the direction opposite to the arrow A1, welding is performed between the intermediate position (first intermediate position) α1 and the corner (first corner) 25 through the proximity portion (first proximity portion) P1.

In the second laser welding, welding is performed from the corner (second corner) 26 to the corner (fourth corner) 28 through the edge (second edge) 21B (arrow A2). That is, welding is performed by sequentially passing through the proximity portion P2 and the proximity portion P4 with the corner 26 as a start point and the corner 28 as an end point. Accordingly, a portion between the corner 26 and the corner 28 including the proximity portions P2 and P4 is welded to the outer container 3, and the entire edge 21B is welded to the outer container 3. The second laser welding is performed only from the corner 26 to the corner 28, and is not performed from the corner 28 to the corner 26. That is, the second laser welding is not performed in the direction opposite to arrow A2.

In the third laser welding, welding is performed from the corner (third corner) 27 to an intermediate position (second intermediate position) α2 of the edge (first edge) 21A through the proximity portion P3 and the intermediate position α1 (arrow A3). That is, welding is performed by sequentially passing through the proximity portion P3 and the intermediate position α1 with the corner 27 as a start point and the intermediate position α2 as an end point. Accordingly, a portion between the corner 27 and the intermediate position α2 including the proximity portion P3 is welded to the outer container 3. The third laser welding is performed only from the corner 27 to the intermediate position α2, and is not performed from the intermediate position α2 to the corner 27. That is, the third laser welding is not performed in the direction opposite to the arrow A3.

The intermediate position α2 is located on the side where the corner 25 is located with respect to the intermediate position α1. Therefore, in the third laser welding, welding is performed beyond the intermediate position α1 through the portion where the first laser welding is performed. Therefore, between the intermediate positions α1 and α2 on the edge (first edge) 21A, the third laser welding is performed so as to overlap the welded portion where the first laser welding was performed. An intermediate range M between the terminals 13A and 13B is defined in the first direction (long-side direction). In the example of FIG. 5, the intermediate positions α1 and α2 are located in the intermediate range. Therefore, a portion where the third laser welding is performed so as to overlap the first laser welding, that is, a portion between the intermediate positions α1 and α2 on the edge 21A, is located in the intermediate range M.

In the fourth laser welding, welding is performed between the corner (first corner) 25 and the corner (second corner) 26 through the edge (third edge) 22A. In the fourth laser welding, any one of the corners 25 and 26 can be set as a start point. In the example of FIG. 5, in the fourth laser welding, welding is performed from the corner 25 as a start point to the corner 26 through the edge 22A (arrow A4). In another example, in the fourth laser welding, welding may be performed from the corner 26 as a start point to the corner 25 through the edge 22A. By the fourth laser welding, a portion between the corners 25 and 26 is welded to the outer container 3, and the entire edge 22A is welded to the outer container 3. At the corner 25, the fourth laser welding is performed so as to overlap the welded portion where the first laser welding was performed. Then, at the corner 26, the fourth laser welding is performed so as to overlap the welded portion where the second laser welding was performed.

In the fifth laser welding that is the final laser welding, welding is performed between the corner (third corner) 27 and the corner (fourth corner) 28 through the edge (fourth edge) 22B. In the fifth laser welding, any one of the corners 27 and 28 can be set as a start point. In the example of FIG. 5, in the fifth laser welding, welding is performed from the corner 28 as a start point to the corner 27 through the edge 22B (arrow A5). In another example, in the fifth laser welding, welding may be performed from the corner 27 as a start point to the corner 28 through the edge 22B. By the fifth laser welding, a portion between the corners 27 and 28 is welded to the outer container 3, and the entire edge 22B is welded to the outer container 3. At the corner 27, the fifth laser welding is performed so as to overlap the welded portion where the third laser welding was performed. Then, at the corner 28, the fifth laser welding is performed so as to overlap the welded portion where the second laser welding was performed.

Since the lid 5 is welded to the outer container 3 as described above, in the present embodiment, five welding marks are formed on the welded portion of the lid 5 to the outer container 3. A first welding mark corresponding to the first laser welding is extended through the proximity portion P1 between the intermediate position α1 of the edge 21A and the corner 25, and a second welding mark corresponding to the second laser welding is extended through the edge 21B including the proximity portion P2 between the corner 26 and the corner 28. A third welding mark corresponding to the third laser welding is extended between the corner 27 and the intermediate position α2 through the proximity portion P3 and the intermediate position α1, and the intermediate position α2 is located on the side where the corner 25 is located with respect to the intermediate position α1 in the edge 21A. A fourth welding mark corresponding to the fourth laser welding is extended between the corners 25 and 26 through the edge 22A, and a fifth welding mark corresponding to the fifth laser welding is extended between the corners 27 and 28 through the edge 22B.

In the battery 1 of the present embodiment, the third welding mark overlaps the first welding mark between the intermediate positions α1 and α2 of the edge 21A at the welded portion of the lid 5 to the outer container 3. In the example of FIG. 5, since the intermediate positions α1 and α2 are located in the intermediate range M between the terminals 13A and 13B in the first direction, the portion where the third welding mark overlaps the first welding mark is located in the intermediate range M. In the battery 1, the fourth welding mark overlaps the first welding mark at the corner 25, and the fourth welding mark overlaps the second welding mark at the corner 26. The fifth welding mark overlaps the third welding mark at the corner 27, and the fifth welding mark overlaps the second welding mark at the corner 28.

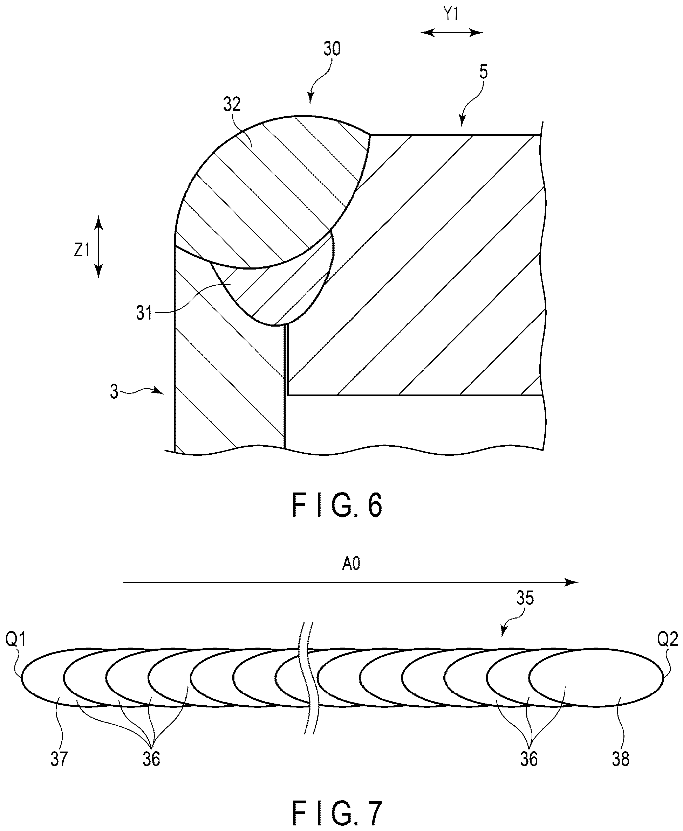

FIG. 6 illustrates an example of a portion where one welding mark 32 overlaps another welding mark 31 in the welded portion 30 of the lid 5 to the outer container 3. In the example of FIG. 6, after the welding mark 31 is formed by laser welding, the welding mark 32 overlaps the welding mark 31 by laser welding subsequent to the laser welding by which the welding mark 31 was formed. The welding mark 31, which is an overlapped one of the two welding marks 31 and 32, is a first laser mark formed by the first laser welding, for example. The welding mark 32, which is an overlapping one of the two welding marks 31 and 32, is a third laser mark formed by the third laser welding, for example. At the portion where the welding mark 32 overlaps the welding mark 31, both the overlapped welding mark 31 and the overlapping welding mark 32 can be observed in the cut cross section. Therefore, in the battery 1, both the overlapped welding mark 31 and the overlapping welding mark 32 can be observed.

In the welding of the lid 5 to the outer container 3, the welding mark 31 is formed by laser welding, so that the reflectance of light on the surface is higher at the portion where the welding mark 31 is formed than before the formation of the welding mark 31. In the case of forming the welding mark 31 to overlap the welding mark 32, laser welding is performed on the portion where the reflectance of light on the surface is increased by the welding mark 31. Therefore, in the case of further performing laser welding on the portion where the welding mark 31 is formed, the output of the laser becomes low, and the penetration depth in the laser welding becomes shallow. For this reason, at the portion where the welding mark 32 overlaps the welding mark 31, the welding mark 32 formed by the later laser welding is shallower and wider than the welding mark 31 formed by the earlier laser welding. Therefore, at the portion where the welding mark 32 overlaps the welding mark 31, the welding marks 31 and 32 can be distinguished from each other in the cut cross section.

When laser welding is performed, a start point mark indicating a start point of the laser welding and an end point mark indicating an end point of the laser welding are formed in the welding marks. FIG. 7 illustrates an example of a welding mark 35 formed by laser welding. In the example of FIG. 7, welding is performed along arrow A0 from the start point to the end point. In the welding mark 35 by laser welding, a large number of spot marks 36 are formed continuously along the direction of the arrow A0. The welding mark 35 extends from an extension end Q1 to an extension end Q2. In the welding mark 35, a start point mark 37 is formed at the end on the side where the extension end Q1 is located, and an end point mark 38 is formed at the end on the side where the extension end Q2 is located. At the start point mark 37, an adjacent spot mark 36 overlaps the spot mark 36 forming the extension end Q1. On the other hand, at the end point mark 38, another spot mark 36 does not overlap the spot mark 36 forming the extension end Q2. Therefore, the start point mark 37 and the end point mark 38 can be identified at the welding mark 35, and the start point and end point of the laser welding by which the welding mark 35 is formed can be recognized from the start point mark 37 and the end point mark 38.

In the battery 1, an end point mark indicating the end point of the third laser welding by which the third welding mark was formed is formed at the intermediate position (second intermediate position) α2. One of the start point mark and the end point mark of the fourth laser welding is formed at the corner 25, and the other of the start point mark and the end point mark of the fourth laser welding is formed at the corner 26. One of the start point mark and the end point mark of the fifth laser welding is formed at the corner 27, and the other of the start point mark and the end point mark of the fifth laser welding is formed at the corner 28. Therefore, in the battery 1, the end point of the third laser welding, the start point and end point of the fourth laser welding, and the start point and end point of the fifth laser welding can be recognized from the welded portion of the lid 5 to the outer container 3.

In the battery 1, each of the start point mark and end point mark of the first laser welding cannot be observed due to the overlap of the third welding mark and the fourth welding mark with the first welding mark. Similarly, each of the start point mark and end point mark of the second laser welding cannot be observed due to the overlap of the fourth welding mark and the fifth welding mark with the second welding mark. The start point mark of the third laser welding cannot be observed due to the overlap of the fifth welding mark with the third welding mark.

In the present embodiment, since the lid 5 is welded to the outer container 3 as described above, the proximity portion P1 is welded by the first laser welding, and then the proximity portion P2 is welded by the second laser welding. Therefore, the time from the welding of the proximity portion P1 to the welding of the proximity portion P2 is shortened, thereby reducing the increase in the temperature of the terminal 13A and its vicinity due to the heat resulting from the welding. In the present embodiment, the proximity portion P4 is welded by the second laser welding, and then the proximity portion P3 is welded by the third laser welding. Therefore, the time from the welding of the proximity portion P4 to the welding of the proximity portion P3 is shortened, thereby reducing the increase in the temperature of the terminal 13B and its vicinity due to the heat resulting from the welding.

As described above, in the present embodiment, in each of the terminal 13A and the insulator 16 and the gasket 17 corresponding to the terminal 13A, even if the distance from the welded portion of the lid 5 to the outer container 3 decreases, the influence of the heat generated by the welding of the lid 5 to the outer container 3 on the gasket 17, the insulator 16, and the like is reduced. In addition, in each of the terminal 13B and the insulator 16 and the gasket 17 corresponding to the terminal 13B, even if the distance from the welded portion of the lid 5 to the outer container 3 decreases, the influence of the heat generated by the welding of the lid 5 to the outer container 3 on the gasket 17, the insulator 16, and the like is reduced. Therefore, even when the volumes of the terminals 13A and 13B are increased to achieve a large current in the battery 1, the influence of heat generated by welding on the pair of gaskets 17 and the pair of insulators 16 is appropriately reduced.

In the welding of the lid 5 to the outer container 3, the influence of the heat generated by the welding on the gaskets 17 and the insulators 16 is reduced, so that in the manufactured battery 1, the sealing performance by the gaskets 17 is appropriately secured at the attachment portions of the terminals 13A and 13B to the lid 5. In addition, in the welding of the lid 5 to the outer container 3, the influence of the heat generated by the welding on the gaskets 17 and the insulators 16 is reduced. Therefore, in the manufactured battery 1, each of the terminals 13A and 13B is appropriately insulated from the lid 5 by the corresponding one of the insulators 16 and the corresponding one of the gaskets 17. As described above, in the battery 1 of the present embodiment, it is possible to achieve a large current by an increase in the volumes of the terminals 13A and 13B, and to reduce the influence of the heat generated by the welding on the gaskets 17 and the like in the welding of the lid 5 to the outer container 3 at the time of manufacturing.

In the present exemplary embodiment, in the second laser welding, welding is performed from the corner 26 as the start point to the corner 28 as the end point through the edge 21B. Therefore, the time from the welding of the proximity portion P1 to the welding of the proximity portion P2 is further shortened, and the influence of the heat generated by the welding on the gasket 17 and the like corresponding to the terminal 13A is further reduced. In the third laser welding, welding is performed from the corner 27 as the start point to the intermediate position α2 as the end point through the proximity portion P3 of the edge 21A. Therefore, the time from the welding of the proximity portion P4 to the welding of the proximity portion P3 is further shortened, and the influence of the heat generated by the welding on the gasket 17 and the like corresponding to the terminal 13B is further reduced.

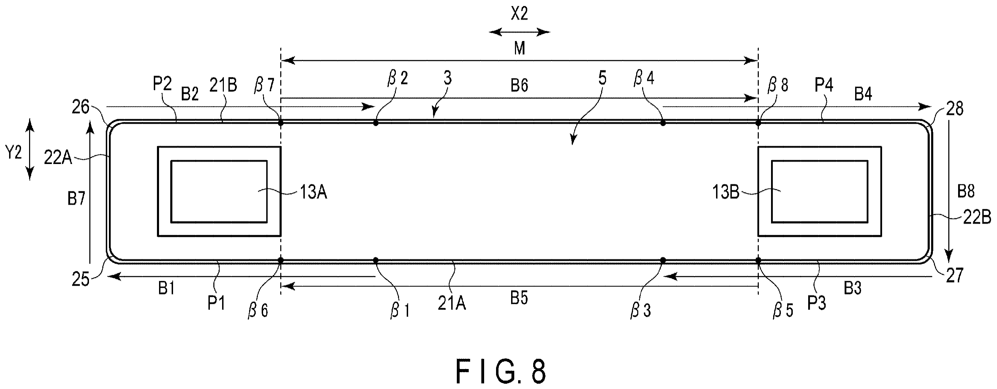

In a modification of the first embodiment, a lid 5 is welded to an outer container 3 as illustrated in FIG. 8 at the time of manufacturing a battery 1. In the modification of FIG. 8, in the welding of the lid 5 to the outer container 3, laser welding is performed eight times.

In the first laser welding, welding is performed between an intermediate position (seventh intermediate position) β1 of an edge (first edge) 21A and a corner (first corner) 25 through a proximity portion (first proximity portion) P1. At this time, in one example, welding is performed in a direction of arrow B1, that is, from the intermediate position β1 to the corner 25. In another example, welding is performed in a direction opposite to arrow B1, that is, from the corner 25 to the intermediate position β1.

In the second laser welding, welding is performed between an intermediate position (eighth intermediate position) β2 of an edge (second edge) 21B and a corner (second corner) 26 through a proximity portion (second proximity portion) P2. At this time, in one example, welding is performed in a direction of arrow B2, that is, from the corner 26 to the intermediate position β2. In another example, welding is performed in a direction opposite to the arrow B2, that is, from the intermediate position β2 to the corner 26.

In the third laser welding, welding is performed between an intermediate position (ninth intermediate position) β3 of the edge (first edge) 21A and a corner (third corner) 27 through a proximity portion (third proximity portion) P3. The intermediate position β3 is located on the side where the corner 27 is located with respect to the intermediate position β1. In the example of FIG. 8, the intermediate positions β1 and β3 are located in an intermediate range M between the terminals 13A and 13B in a first direction. In one example, welding is performed in a direction of arrow B3, that is, from the corner 27 to the intermediate position β3. In another example, welding is performed in a direction opposite to the arrow B3, that is, from the intermediate position β3 to the corner 27.

In the fourth laser welding, welding is performed between a corner (fourth corner) 28 and an intermediate position (tenth intermediate position) β4 of the edge (second edge) 21B through a proximity portion (fourth proximity portion) P4. The intermediate position β4 is located on the side where the corner 28 is located with respect to the intermediate position β2. In the example of FIG. 8, the intermediate positions β2 and β4 are located in the intermediate range M. In one example, welding is performed in a direction of arrow B4, that is, from the intermediate position β4 to the corner 28. In another example, welding is performed in a direction opposite to the arrow B4, that is, from the corner 28 to the intermediate position β4.

In the fifth to the eighth laser welding, any one of the following four laser welding processes φ1 to φ4 is performed. Each of the laser welding processes φ1 to φ4 may be performed at any one of the fifth to the eighth laser welding, and the order of performing the laser welding processes φ1 to φ4 is not particularly limited.

In the laser welding process φ1, welding is performed between an intermediate position (eleventh intermediate position) β5 and an intermediate position (twelfth intermediate position) β6 on the edge (first edge) 21A. At this time, in one example, welding is performed in a direction of arrow B5, that is, from the intermediate position β5 to the intermediate position β6. In another example, welding is performed in a direction opposite to the arrow B5, that is, from the intermediate position β6 to the intermediate position β5. The intermediate position β5 is located on the side where the corner 27 is located with respect to the intermediate position β3, and the intermediate position β6 is located on the side where the corner 25 is located with respect to the intermediate position β1. Therefore, on the edge (first edge) 21A, the laser welding φ1 is further performed between the intermediate positions β3 and β5 so as to overlap the welded portion where the third laser welding was performed, and on the edge 21A, the laser welding φ1 is further performed between the intermediate positions β1 and β6 so as to overlap the welded portion where the first laser welding was performed. In the example of FIG. 8, a portion where the laser welding φ1 is performed so as to overlap the first laser welding, that is, a portion between the intermediate positions β1 and β6 on the edge 21A, is located in the intermediate range M. A portion where the laser welding φ1 is performed so as to overlap the third laser welding, that is, a portion between the intermediate positions β3 and β5 on the edge 21A, is located in the intermediate range M.

In the laser welding process φ2, welding is performed between an intermediate position (thirteenth intermediate position) β7 and an intermediate position (fourteenth intermediate position) β8 on the edge (second edge) 21B. At this time, in one example, welding is performed in a direction of arrow B6, that is, from the intermediate position β7 to the intermediate position β8. In another example, welding is performed in a direction opposite to the arrow B6, that is, from the intermediate position β8 to the intermediate position β7. The intermediate position β7 is located on the side where the corner 26 is located with respect to the intermediate position β2, and the intermediate position β8 is located on the side where the corner 28 is located with respect to the intermediate position β4. Therefore, on the edge (second edge) 21B, the laser welding φ2 is further performed between the intermediate positions β2 and β7 so as to overlap the welded portion where the second laser welding was performed, and on the edge 21B, the laser welding φ2 is further performed between the intermediate positions β4 and β8 so as to overlap the welded portion where the fourth laser welding was performed. In the example of FIG. 8, a portion where the laser welding φ2 is performed so as to overlap the second laser welding, that is, a portion between the intermediate positions β2 and β7 on the edge 21B, is located in the intermediate range M. A portion where the laser welding φ2 is performed so as to overlap the fourth laser welding, that is, a portion between the intermediate positions β4 and β8 on the edge 21B, is located in the intermediate range M.

In the laser welding φ3, welding is performed between the corner (first corner) 25 and the corner (second corner) 26 through the edge (third edge) 22A. At this time, in one example, welding is performed in a direction of arrow B7, that is, from the corner 26 to the corner 25. In another example, welding is performed in a direction opposite to the arrow B7, that is, from the corner 25 to the corner 26. At the corner 25, the laser welding φ3 is performed so as to overlap the welded portion where the first laser welding was performed. Then, at the corner 26, the laser welding φ3 is performed so as to overlap the welded portion where the second laser welding was performed.

In the laser welding φ4, welding is performed between the corner (third corner) 27 and the corner (fourth corner) 28 through the edge (fourth edge) 22B. At this time, in one example, welding is performed in a direction of arrow B8, that is, from the corner 28 to the corner 27. In another example, welding is performed in a direction opposite to the arrow B8, that is, from the corner 27 to the corner 28. At the corner 27, the laser welding φ4 is performed so as to overlap the welded portion where the third laser welding was performed. Then, at the corner 28, the laser welding φ4 is performed so as to overlap the welded portion where the fourth laser welding was performed.

Since the lid 5 is welded to the outer container 3 as described above, in the present modification, eight welding marks are formed on the welded portion of the lid 5 to the outer container 3. A first welding mark corresponding to the first laser welding is extended through the proximity portion P1 between the intermediate position β1 of the edge 21A and the corner 25, and a second welding mark corresponding to the second laser welding is extended through the proximity portion P2 between the corner 26 and the intermediate position β2. The third welding mark corresponding to the third laser welding is extended through the proximity portion P3 between the corner 27 and the intermediate position β3, and the fourth welding mark corresponding to the fourth laser welding is extended through the proximity portion P4 between the corner 28 and the intermediate position β4. The fifth welding mark corresponding to the laser welding φ1 is extended through the intermediate positions β1 and β3 between the intermediate positions β5 and β6 on the edge 21A, and the sixth welding mark corresponding to the laser welding φ2 is extended through the intermediate positions β2 and β4 between the intermediate positions β7 and β8 on the edge 21B. A seventh welding mark corresponding to the laser welding φ3 is extended through the edge 22A between the corners 25 and 26, and an eighth welding mark corresponding to the laser welding φ4 is extended through the edge 22B between the corners 27 and 28.

In the battery 1 of the present modification, at the welded portion of the lid 5 to the outer container 3, the fifth welding mark overlaps the first welding mark between the intermediate positions β1 and β6 on the edge 21A, and the fifth welding mark overlaps the third welding mark between the intermediate positions β3 and β5 on the edge 21A. The sixth welding mark overlaps the second welding mark between the intermediate positions β2 and β7 on the edge 21B, and the sixth welding mark overlaps the fourth welding mark between the intermediate positions β4 and β8 on the edge 21B. In the example of FIG. 8, the portion where the fifth welding mark overlaps the first welding mark, the portion where the fifth welding mark overlaps the third welding mark, the portion where the sixth welding mark overlaps the second welding mark, and the portion where the sixth welding mark overlaps the fourth welding mark are located in the intermediate range M between the terminals 13A and 13B in the first direction. In the battery 1, the seventh welding mark overlaps the first welding mark at the corner 25, and the seventh welding mark overlaps the second welding mark at the corner 26. The eighth welding mark overlaps the third welding mark at the corner 27, and the eighth welding mark overlaps the fourth welding mark at the corner 28.

Furthermore, in the battery 1 of the present modification, one of the start point mark and the end point mark of the laser welding φ1 in which the fifth welding mark was formed is formed at the intermediate position β5, and the other of the start point mark and the end point mark of the laser welding φ1 is formed at the intermediate position β6. One of the start point mark and the end point mark of the laser welding φ2 in which the sixth welding mark was formed is formed at the intermediate position β7, and the other of the start point mark and the end point mark of the laser welding φ2 is formed at the intermediate position β8. One of the start point mark and the end point mark of the laser welding φ3 is formed at the corner 25, and the other of the start point mark and the end point mark of the laser welding φ3 is formed at the corner 26. One of the start point mark and the end point mark of the laser welding φ4 is formed at the corner 27, and the other of the start point mark and the end point mark of the laser welding φ4 is formed at the corner 28.

In the present modification, the proximity portion P1 is welded by the first laser welding, and then the proximity portion P2 is welded by the second laser welding. Therefore, the time from the welding of the proximity portion P1 to the welding of the proximity portion P2 is shortened, thereby reducing the increase in the temperature of the terminal 13A and its vicinity due to the heat resulting from the welding. In the present modification, the proximity portion P3 is welded by the third laser welding, and then the proximity portion P4 is welded by the fourth laser welding. Therefore, the time from the welding of the proximity portion P3 to the welding of the proximity portion P4 is shortened, thereby reducing the increase in the temperature of the terminal 13B and its vicinity due to the heat resulting from the welding.

As described above, in the present modification, in each of the terminal 13A and the insulator 16 and the gasket 17 corresponding to the terminal 13A, even if the distance from the welded portion of the lid 5 to the outer container 3 decreases, the influence of the heat generated by the welding of the lid 5 to the outer container 3 on the gasket 17, the insulator 16, and the like is reduced. In addition, in each of the terminal 13B and the insulator 16 and the gasket 17 corresponding to the terminal 13B, even if the distance from the welded portion of the lid 5 to the outer container 3 decreases, the influence of the heat generated by the welding of the lid 5 to the outer container 3 on the gasket 17, the insulator 16, and the like is reduced. Therefore, also in the present modification, it is possible to achieve a large current by an increase in the volumes of the terminals 13A and 13B, and to reduce the influence of the heat generated by the welding on the gaskets 17 and the like in the welding of the lid 5 to the outer container 3 at the time of manufacturing.

In each of the welding of the first embodiment as illustrated in FIG. 5 and the welding of the modification illustrated in FIG. 8, at least the proximity portion (first proximity portion) P1 of the edge (first edge) 21A is welded by the first laser welding, and one or more of the start points and one or more of the end points of the plurality of processes of laser welding are located in the intermediate range M. Then, at least the proximity portion (second proximity portion) P2 of the edge (second edge) 21B is welded by the second laser welding, and at least the proximity portion (third proximity portion) P3 of the edge 21A is welded by the third laser welding.

In each of the battery 1 formed by the welding of the first embodiment as illustrated in FIG. 5 and the battery 1 formed by the welding of the modification illustrated in FIG. 8, the plurality of welding marks forming the welded portion of the lid 5 to the outer container 3 includes the first welding mark extended through the proximity portion P1 of the edge 21A, and one extension end of the first welding mark is located in the intermediate range M between the terminals 13A and 13B in the first direction. A welding mark different from the first welding mark among the plurality of welding marks overlaps a portion of the first welding mark on the edge 21A. The plurality of welding marks at the welded portion includes the second welding mark extended through the proximity portion P2 of the edge 21B and the third welding mark extended through the proximity portion P3 of the edge 21A.

Either the welding of the first embodiment or the welding of the modification of FIG. 8 is performed, so that it is possible to shorten the time from the welding of the proximity portion P1 to the welding of the proximity portion P2, and it is possible to shorten the time from the welding of one of the proximity portions P3 and P4 to the welding of the other of the proximity portions P3 and P4. Therefore, even if the battery 1 is provided with a large current by increasing the volumes of the terminals 13A and 13B and the proximity portions P1 and P3 of the edge 21A and the proximity portions P2 and P4 of the edge 21B are formed, it is possible to appropriately reduce the influence of heat generated by welding on the gaskets 17 and the insulators 16.

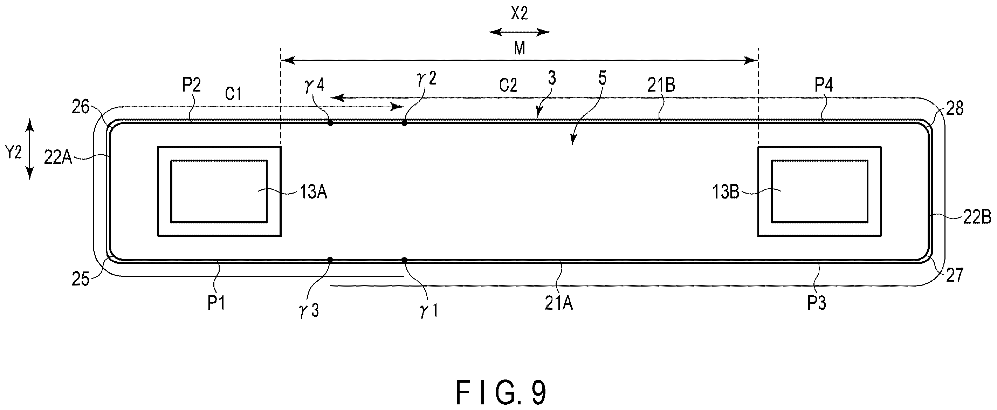

In a second embodiment that is a modification of the first embodiment, a lid 5 is welded to an outer container 3 as illustrated in FIG. 9 at the time of manufacturing a battery 1. In the second embodiment, in the welding of the lid 5 to the outer container 3, laser welding is performed twice. For this reason, in the battery 1, the first welding mark corresponding to first laser welding and the second welding mark corresponding to second laser welding are formed at the welded portion of the lid 5 to the outer container 3.

In the first laser welding, welding is performed from an intermediate position (third intermediate position) γ1 of an edge (first edge) 21A to an intermediate position (fourth intermediate position) γ2 of an edge (second edge) 21B, through a proximity portion (first proximity portion) P1, a corner (first corner) 25, an edge (third edge) 22A, a corner (second corner) 26, and a proximity portion (second proximity portion) P2 in this order. Therefore, in the first laser welding, the proximity portion P1 of the edge 21A, the edge 22A, and the proximity portion P2 of the edge 21B are welded in this order with the intermediate position γ1 as a start point and the intermediate position γ2 as an end point.

In second laser welding, welding is performed from an intermediate position (fifth intermediate position) γ3 of the edge (first edge) 21A to an intermediate position (sixth intermediate position) γ4 of the edge (second edge) 21B, through a proximity portion (third proximity portion) P3, a corner (third corner) 27, the edge (fourth edge) 22B, a corner (fourth corner) 28, and a proximity portion (fourth proximity portion) P4 in this order. Therefore, in the second laser welding, the proximity portion P3 of the edge 21A, the edge 22B, and the proximity portion P4 of the edge 21B are welded in this order with the intermediate position γ3 as a start point and the intermediate position γ4 as an end point. The intermediate position γ3 is located on the side where the corner 25 is located with respect to the intermediate position γ1 on the edge 21A. The intermediate position γ4 is located on the side where the corner 26 is located with respect to the intermediate position γ2 on the edge 21B.

Between the intermediate positions γ1 and γ3 on the edge (first edge) 21A and between the intermediate positions γ2 and γ4 on the edge (second edge) 21B, the second laser welding is further performed so as to overlap the welded portion where the first laser welding was performed. In the example of FIG. 9, the intermediate positions γ1 to γ4 are located in an intermediate range M between the terminals 13A and 13B in the first direction. Therefore, a portion where the second laser welding is performed so as to overlap the first laser welding, that is, a portion between the intermediate positions γ1 and γ3 on the edge 21A and a portion between the intermediate positions γ2 and γ4 on the edge 21B are positioned in the intermediate range M.

Since the lid 5 is welded to the outer container 3 as described above, in the present embodiment, two welding marks are formed on the welded portion of the lid 5 to the outer container 3. The first welding mark corresponding to the first laser welding is extended between the intermediate position γ1 of the edge 21A and the intermediate position γ2 of the edge 21B through the proximity portion P1, the corner 25, the edge 22A, the corner 26, and the proximity portion P2. The second welding mark corresponding to the second laser welding is formed between the intermediate position γ3, located on the side where the corner 25 is located with respect to the intermediate position γ1 on the edge 21A, and the intermediate position γ4, located on the side where the corner 26 is located with respect to the intermediate position γ2 on the edge 21B. The second welding mark is extended through the proximity portion P3, the corner 27, the edge 22B, the corner 28, and the proximity portion P4.

In the battery 1 of the present embodiment, the second welding mark overlaps the first welding mark at each of the edges 21A and 21B at the welded portion of the lid 5 to the outer container 3. That is, the second welding mark overlaps the first welding mark between the intermediate positions γ1 and γ3 on the edge 21A and between the intermediate positions γ2 and γ4 on the edge 21B. In the battery 1 according to the present embodiment, the start point mark of the second laser welding by which the second welding mark was formed is formed at the intermediate position γ3, and the end point mark of the second laser welding is formed at the intermediate position γ4.

In the present embodiment, the proximity portion P1 and the proximity portion P2 are welded in this order by the first laser welding. Therefore, the time from the welding of the proximity portion P1 to the welding of the proximity portion P2 is shortened, thereby reducing the increase in the temperature of the terminal 13A and its vicinity due to the heat resulting from the welding. In the present embodiment, the proximity portion P3 and the proximity portion P4 are welded in this order by the second laser welding. Therefore, the time from the welding of the proximity portion P3 to the welding of the proximity portion P4 is shortened, thereby reducing the increase in the temperature of the terminal 13B and its vicinity due to the heat resulting from the welding.

As described above, also in the present embodiment, in each of the terminal 13A and the insulator 16 and the gasket 17 corresponding to the terminal 13A, even if the distance from the welded portion of the lid 5 to the outer container 3 decreases, the influence of the heat generated by the welding of the lid 5 to the outer container 3 on the gasket 17, the insulator 16, and the like is reduced. In addition, in each of the terminal 13B and the insulator 16 and the gasket 17 corresponding to the terminal 13B, even if the distance from the welded portion of the lid 5 to the outer container 3 decreases, the influence of the heat generated by the welding of the lid 5 to the outer container 3 on the gasket 17, the insulator 16, and the like is reduced. Therefore, also in the present embodiment, it is possible to achieve a large current by an increase in the volumes of the terminals 13A and 13B, and to reduce the influence of the heat generated by the welding on the gaskets 17 and the like in the welding of the lid 5 to the outer container 3 at the time of manufacturing.

In any of the embodiments described above, at least the proximity portion (first proximity portion) P1 of the edge (first edge) 21A is welded by the first laser welding, and one or more of the start points and one or more of the end points of the plurality of processes of laser welding are located in the intermediate range M. In the battery 1 according to any one of the above embodiments, the plurality of welding marks forming the welded portion of the lid 5 to the outer container 3 includes the first welding mark extended through the proximity portion P1 of the edge 21A, and one extension end of the first welding mark is located in the intermediate range M between the terminals 13A and 13B in the first direction. A welding mark different from the first welding mark among the plurality of welding marks overlaps a portion of the first welding mark on the edge 21A.

Performing welding in the same manner as in any of the foregoing embodiments and the like makes it possible to shorten the time from when the proximity portion P1 is welded to when the proximity portion P2 is welded, and to shorten the time from when one of the proximity portions P3 and P4 is welded to when the other of the proximity portions P3 and P4 is welded. Therefore, even if the battery 1 is provided with a large current by increasing the volumes of the terminals 13A and 13B and the proximity portions P1 and P3 of the edge 21A and the proximity portions P2 and P4 of the edge 21B are formed, it is possible to appropriately reduce the influence of heat generated by welding on the gaskets 17 and the insulators 16.

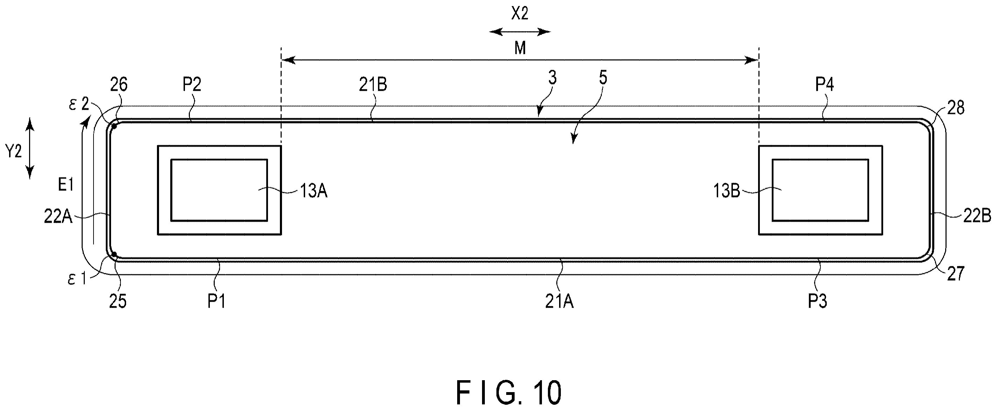

As verification related to the embodiments and the like, temporal changes in the temperature of the gasket 17 arranged at the attachment portion of the terminal 13A while the lid 5 is attached to the outer container 3 were calculated by simulation analysis. In the verification, temporal changes in the temperature of the gasket 17 were calculated in each of the case of welding in the same manner as in the first embodiment in FIG. 5 and the like, the case of welding in the same manner as in the second embodiment in FIG. 9 and the like, and the case of welding in a comparative example in FIG. 10. In the comparative example, as illustrated in FIG. 10, in the welding of a lid 5 to an outer container 3, laser welding was performed only once. In first laser welding, welding was performed from a start point ε1 at a corner (first corner) 25, through an edge (third edge) 22A, a corner (second corner) 26, an edge (second edge) 21B, a corner (fourth corner) 28, an edge (fourth edge) 22B, a corner (third corner) 27, and an edge (first edge) 21A in this order. Then, after the outer periphery of the lid 5 was welded one round, the edge 22A was welded beyond the corner 25, and up to an end point ε2 of the corner 26 was welded.

The verification by simulation has revealed that the maximum temperature of the gasket 17 during welding was lowered in each of the case of welding as in the first embodiment and the case of welding as in the second embodiment, as compared with the case of welding as in the comparative example, and that the rise in the temperature of the gasket 17 due to the heat generated by welding was reduced. In the comparative example, since the time from the welding of the proximity portion P2 of the edge 21B to the welding of the proximity portion P1 of the edge 21A was long, the temperature of the gasket 17 while welding of the proximity portion P1 was high in particular. In fact, as compared with the case of welding as in the comparative example, the maximum temperature of the gasket 17 during welding was lowered by about 15% in the case of welding as in the first embodiment and by about 12% in the case of welding as in the second embodiment.

As another verification related to the embodiments and the like, the temperature of the peripheral edge of the through hole 15 formed at the attachment portion of the terminal 13A was measured while the lid 5 was attached to the outer container 3. In the verification, the temperature of the peripheral edge of the through hole 15 was measured in each of the case of welding as in the first embodiment in FIG. 5 and the like and the case of welding as in the comparative example in FIG. 10. The verification has revealed that the increase in the temperature at the peripheral edge of the through hole 15 from the state before welding was reduced in the case of welding as in the first embodiment as compared with the case of welding as in the comparative example. In fact, as compared with the case of welding as in the comparative example, in the case of welding as in the first embodiment, the increase in the temperature at the peripheral edge of the through hole 15 due to welding was reduced by 10.6 °C.

According to at least one of these embodiments or examples, a pair of terminals are attached to a lid that has an outer periphery formed by a first edge and a second edge along a first direction and a third edge and a fourth edge along a second direction intersecting the first direction, with the second terminal spaced from the first terminal toward the side where the fourth edge is located in the first direction, and a first proximity portion closer to the first terminal than the third edge is formed on the first edge. Then, the outer periphery of the lid is welded to an outer container over the entire circumference by laser welding a plurality of times. In the first laser welding, at least the first proximity portion is welded, and one or more of the start points and one or more of the end points of the plurality of processes of laser welding are located in an intermediate range between the first terminal and the second terminal in the first direction. Accordingly, it is possible to provide a battery that can provide a large current due to an increase in the volume of the terminals and reduce the influence of heat generated by welding the lid to the outer container on the gasket and the like, and a manufacturing method of the battery.

Although some embodiments of the present invention have been described, these embodiments are presented as examples, and are not intended to limit the scope of the invention. These novel embodiments can be implemented in various other modes, and various omissions, substitutions, and changes can be made without departing from the gist of the invention. These embodiments and modifications thereof are included in the scope and gist of the invention, and are included in the invention described in the claims and the equivalent scope thereof.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A manufacturing method of a battery, comprising:
forming an outer container having an inner cavity open to an outside;
forming a lid in which a first edge and a second edge along a first direction, and a third edge and a fourth edge along a second direction intersecting the first direction form an outer periphery;
attaching the first terminal and the second terminal to the lid while separating the second terminal from the first terminal to a side on which the fourth edge is located in the first direction, and forming a first proximity portion closer to the first terminal than the third edge on the first edge;
storing an electrode group electrically connected to the first terminal and the second terminal in the inner cavity of the outer container, and closing an opening of the inner cavity with the lid; and
welding the outer periphery of the lid to the outer container over an entire circumference by performing laser welding a plurality of times on the lid closing the opening of the inner cavity, such that at least the first proximity portion of the first edge is welded by first laser welding, and one or more of start points and one or more of end points of the plurality of processes of laser welding are located in an intermediate range between the first terminal and the second terminal in the first direction.

2. The manufacturing method according to claim 1, further comprising:
forming a second proximity portion closer to the first terminal than the third edge on the second edge and forming a third proximity portion closer to the second terminal than the fourth edge on the first edge by attaching the first terminal and the second terminal to the lid;
welding at least the second proximity portion of the second edge by second laser welding among the plurality of processes of laser welding; and
welding at least the third proximity portion of the first edge by third laser welding among the plurality of processes of laser welding.

3. The manufacturing method according to claim 2, further comprising:
in the formation of the lid, forming a first corner between the first edge and the third edge, a second corner between the second edge and the third edge, a third corner between the first edge and the fourth edge, and a fourth corner between the second edge and the fourth edge;
in the first laser welding, performing welding through the first proximity portion between a first intermediate position of the first edge and the first corner;
in the second laser welding, performing welding from the second corner to the fourth corner through the second edge including the second proximity portion;
in the third laser welding, performing welding from the third corner to a second intermediate position, located on a side where the first corner is located with respect to the first intermediate position on the first edge, through the third proximity portion and the first intermediate position in order;
in fourth laser welding among the plurality of processes of laser welding, performing welding through the third edge between the first corner and the second corner; and
in fifth laser welding among the plurality of processes of laser welding, performing welding through the fourth edge between the third corner and the fourth corner.

4. The manufacturing method according to claim 3, wherein
the first intermediate position is located in the intermediate range, and
the second intermediate position is located on the side where the first corner is located with respect to the first intermediate position in the intermediate range.

5. The manufacturing method according to claim 1, further comprising:
forming a second proximity portion closer to the first terminal than the third edge on the second edge by attaching the first terminal to the lid;
forming a third proximity portion closer to the second terminal than the fourth edge on the first edge and forming a fourth proximity portion closer to the second terminal than the fourth edge on the second edge by attaching the second terminal to the lid;
welding the first proximity portion of the first edge, the third edge, and the second proximity portion of the second edge in this order by the first laser welding; and
welding the third proximity portion of the first edge, the fourth edge, and the fourth proximity portion of the second edge in this order by the second laser welding among the plurality of processes of laser welding.

6. The manufacturing method according to claim 5, further comprising:
in the formation of the lid, forming a first corner between the first edge and the third edge, a second corner between the second edge and the third edge, a third corner between the first edge and the fourth edge, and a fourth corner between the second edge and the fourth edge,
in the first laser welding, performing welding from a third intermediate position of the first edge to a fourth intermediate position of the second edge through the first proximity portion, the first corner, the third edge, the second corner, and the second proximity portion in order, and
in the second laser welding, performing welding from a fifth intermediate position, located on a side where the first corner is located with respect to the third intermediate position on the first edge, to a sixth intermediate position, located on a side where the second corner is located with respect to the fourth intermediate position on the second edge, through the third proximity portion, the third corner, the fourth edge, the fourth corner, and the fourth proximity portion in order.

7. The manufacturing method according to claim 6, wherein
the third intermediate position and the fourth intermediate position are located in the intermediate range,
the fifth intermediate position is located on the side where the first corner is located with respect to the third intermediate position in the intermediate range, and
the sixth intermediate position is located on the side where the second corner is located with respect to the fourth intermediate position in the intermediate range.

8. A battery comprising:
an outer container in which an inner cavity open to an outside is formed;
a lid that includes a first edge and a second edge along a first direction, and a third edge and a fourth edge along a second direction intersecting the first direction, an outer periphery being formed by the first edge, the second edge, the third edge, and the fourth edge, the lid closing an opening of the inner cavity of the outer container;
an electrode group stored in the inner cavity of the outer container;
a first terminal that is attached to the lid in a state of being electrically connected to the electrode group, and to which a first proximity portion of the first edge is located closer than the third edge;
a second terminal that is attached to the lid in a state of being electrically connected to the electrode group and is arranged away from the first terminal toward a side where the fourth edge is located in the first direction; and
a welded portion that includes a plurality of welding marks, the outer periphery of the lid being welded to the outer container over an entire circumference by the plurality of welding marks, the plurality of welding marks including a first welding mark extended through the first proximity portion of the first edge, one or both extension ends of the first welding mark being located in an intermediate range between the first terminal and the second terminal in the first direction, and a welding mark different from the first welding mark among the plurality of welding marks overlapping a portion of the first welding mark on the first edge.

9. The battery according to claim 8, wherein
on the second edge, a second proximity portion is located closer to the first terminal than the third edge,
on the first edge, a third proximity portion is located closer to the second terminal than the fourth edge, and
the plurality of welding marks at the welded portion includes a second welding mark extended through the second proximity portion of the second edge and a third welding mark extended through the third proximity portion of the first edge.

10. The battery according to claim 9, wherein
the lid includes a first corner between the first edge and the third edge, a second corner between the second edge and the third edge, a third corner between the first edge and the fourth edge, and a fourth corner between the second edge and the fourth edge,
the first welding mark is extended through the first proximity portion between a first intermediate position of the first edge and the first corner portion,
the second welding mark is extended through the second edge including the second proximity portion between the second corner and the fourth corner,
the third welding mark is extended through the third proximity portion and the first intermediate position between the third corner and a second intermediate position located on a side where the first corner is located with respect to the first intermediate position on the first edge,
the third welding mark overlaps the first welding mark between the first intermediate position and the second intermediate position on the first edge, and
the welded portion includes a fourth welding mark extended through the third edge between the first corner and the second corner, and a fifth welding mark extended through the fourth edge between the third corner and the fourth corner.

11. The battery according to claim 10, wherein an end point mark indicating an end point of laser welding by which the third welding mark was formed is formed at the second intermediate position.

12. The battery according to claim 8, wherein
on the second edge, a second proximity portion is located closer to the first terminal than the third edge,
on the first edge, a third proximity portion is located closer to the second terminal than the fourth edge,
on the second edge, a fourth proximity portion is located closer to the second terminal than the fourth edge,
the first welding mark is extended through the first proximity portion of the first edge, the third edge, and the second proximity portion of the second edge,
the plurality of welding marks of the welded portion include a second welding mark that is extended through the third proximity portion of the first edge, the fourth edge, and the fourth proximity portion of the second edge, and
the second welding mark overlaps the first welding mark on the first edge and the second edge.

13. The battery according to claim 12, wherein
the lid includes a first corner between the first edge and the third edge, a second corner between the second edge and the third edge, a third corner between the first edge and the fourth edge, and a fourth corner between the second edge and the fourth edge,
the first welding mark is extended through the first proximity portion, the first corner, the third edge, the second corner, and the second proximity portion between a third intermediate position of the first edge and a fourth intermediate position of the second edge,
the second welding mark is extended through the third proximity portion, the third corner, the fourth edge, the fourth corner, and the fourth proximity portion between a fifth intermediate position, located on a side where the first corner is located with respect to the third intermediate position on the first edge, and a sixth intermediate position, located on a side where the second corner is located with respect to the fourth intermediate position on the second edge, and
the second welding mark overlaps the first welding mark between the third intermediate position and the fifth intermediate position on the first edge and between the fourth intermediate position and the sixth intermediate position on the second edge.

14. The battery according to claim 13, wherein
a start point mark indicating a start point of laser welding by which the second welding mark was formed is formed at the fifth intermediate position, and
an end point mark indicating an end point of laser welding by which the second welding mark was formed is formed at the sixth intermediate position.

15. The battery according to any one of claims 8 to 14, wherein a portion where the welding mark different from the first welding mark overlaps the first welding mark in the first welding mark is located in the intermediate range.
